(19) Europäisches Patentamt
European Patent Office
Office européen des brevets

(11) **EP 2 743 803 A1**

(12) **EUROPEAN PATENT APPLICATION**

(43) Date of publication:
**18.06.2014 Bulletin 2014/25**

(51) Int Cl.:
***G06F 3/041*** (2006.01)   ***G06F 3/0354*** (2013.01)

(21) Application number: **12197085.9**

(22) Date of filing: **13.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **BlackBerry Limited**
**Waterloo, ON N2K 0A7 (CA)**

(72) Inventors:
• **Idzik, Jacek S.**
  **Waterloo, Ontario N2L 3W8 (CA)**

• **Mercea, Cornel**
  **Waterloo, Ontario N2L 3W8 (CA)**

(74) Representative: **Roberts, Gwilym Vaughan**
**Kilburn & Strode LLP**
**Electronics**
**20 Red Lion Street**
**London WC1R 4PJ (GB)**

Remarks:
Amended claims in accordance with Rule 137(2) EPC.

(54) **Automatic calibration of stylus location using mapping between color and location**

(57)    The present disclosure describes an electronic device 110, a stylus 102 having a color sensor 410, and methods for calibrating the stylus 102 relative to a screen 108 of the electronic device 110. A color image 106 is displayed on the screen 108 of the electronic device 110, the color image comprising pixels each having one or more color components (302, 304). A first screen location is determined at which the color components of a pixel 210 match one or more color components sensed by the stylus 102. A second screen location is determined in response to a sensed location of the stylus 108 and dependent upon one or more calibration parameters. The calibration parameters are adjusted dependent upon the first and second screen locations.

*FIG. 4*

EP 2 743 803 A1

**Description**

BACKGROUND

A stylus pointing device enables information to be input to an electronic device, such as a personal computer, tablet computer, smart-phone, or personal digital assistant. In particular, a stylus may be used in a conjunction with a display. Location coordinates provided by the stylus may be mapped to location coordinates on the display. In order that the location of the stylus corresponds accurately with the mapped location on the display, a calibration procedure may be performed.

In one calibration procedure, calibration images (such as dots) are rendered to indicate one or more locations on the display and a user is instructed to touch the stylus to the display at the indicated locations. However, this approach is inconvenient and the calibration accuracy is dependent upon how close the user moves the stylus to each indicated location.

Light pens use a mono-chromatic photo-detector to detect light displayed on the screen of a cathode ray tube (CRT). In a CRT, a single beam of electronics is moved across a phosphorescent screen in a raster scan. The estimated location of the beam at the time when light is detected by the pen is indicative of the location of the pen on the screen. This approach does not work with liquid crystal displays, however, since many pixels are illuminated at any given time, and any particular pixel may have constant illumination for extended durations. Even with raster scanned screens, the light pen may be located at a dark portion of the screen and be undetected.

In a second calibration procedure, a calibration image or pattern is periodically generated in the vicinity of the mapped location of the display. The calibration pattern may be a sequence of dots at increasing distances from the mapped location. When the image is detected by photo-sensor in the tip of the stylus, the actual position of the stylus is known. This approach is similar to the light pen approach, in that a time-varying illumination is used. However, the approach has the disadvantage of generating a calibration pattern that is visible to a user and may interfere with another image rendered on the screen.

Accordingly, it would be useful to provide a method and apparatus for stylus calibration that requires no user interaction, is not visible to the user, and may be used with pixelated display screens.

BRIEF DESCRIPTION OF THE DRAWINGS

Some embodiments of the present disclosure will be described below with reference to the included drawings such that like reference numerals refer to like elements and in which:

    **FIG. 1** is a diagrammatic representation of a system for automatic calibration of a stylus, in accordance with an exemplary embodiments of the present disclosure;

    **FIG. 2** is an example of a displayed icon that includes a color palette, in accordance with illustrative embodiments of the present disclosure;

    **FIG. 3** is an example of a mapping between displayed color components and displayed locations, in accordance with exemplary embodiments of the present disclosure;

    **FIG. 4** is a block diagram of a system for automatic calibration of a stylus, in accordance with some illustrative embodiments of the present disclosure;

    **FIG. 5** is a diagram of a color-sensing stylus, in accordance with some exemplary embodiments of the present disclosure;

    **FIG. 6** is a flow chart of a method for automatic calibration of a stylus, in accordance with certain illustrative embodiments of the present disclosure; and

    **FIG. 7** is a flow chart of a further method for automatic calibration of a stylus, in accordance with illustrative embodiments of the present disclosure.

DETAILED DESCRIPTION

For simplicity and clarity of illustration, reference numerals may be repeated among the figures to indicate corresponding or analogous elements. Numerous details are set forth to provide an understanding of the illustrative embodiments described herein. The embodiments may be practiced without these details. In other instances, well-known methods, procedures, and components have not been described in detail to avoid obscuring the disclosed embodiments. The description is not to be considered as limited to the scope of the embodiments shown and described herein.

A stylus is designed to convey the location of the tip of the stylus on a surface, such as a tablet or screen, to a host electronic device. The host electronic device may be a portable computer, a handheld computer, a Personal Digital Assistant, a mobile cellular telephone, a smart-phone, a desktop computer, a tablet or convertible computer or the like. The location of the stylus may be determined by a variety of methods, including detecting the interaction of the stylus with the electrical properties of the screen (electromagnetic induction, electrical resistance, electrical capacitance), the optical properties of the screen, or by ultrasonic location, or by other sensing means. These methods use sensors or transducers to convert physical phenomena into electrical signals. The electrical signals are then used to estimate the stylus location. The estimation utilizes knowledge of calibration parameters that may be dependent upon the sensitivity and/or locations of the sensors, for example. If the calibration parameters are inaccurate, the estimate of the stylus location will also be inaccurate. Calibration parameters may change over time, so it is desirable that calibration parameters be re-measured periodically. Examples of calibration parameters include detector sensitivities and offset, physical properties such as material properties, and properties that depend on environmental parameters. For example, an ultrasonic detection system uses knowledge of the propagation speed of ultrasound in the vicinity of the electronic device. This varies with environmental properties such a temperature and humidity, for example.

In accordance with certain aspects of the present disclosure, calibration parameters are automatically re-measured during normal interaction between a stylus and a graphical user interface displayed on a screen of a host device, without the need for a dedicated calibration process.

In accordance with exemplary embodiments, a color image, comprising an array of pixels, is displayed on the screen. A first screen location is determined at which one or more color components of a pixel of the displayed color image match color components sensed by the stylus. A second screen location is determined in response to a sensed location of a stylus and dependent upon one or more calibration parameters. If the first and second locations are different, the calibration parameters are adjusted dependent upon the first and second screen locations.

In general, a color image comprises a mapping from the screen locations of pixels to the color components of the pixels. In accordance with certain aspects of the disclosure, the color image is selected such that there is a mapping from color components to screen locations. For most images, such a mapping does not exist, since the same color may be displayed at multiple locations. However, images may be designed for which the mapping does exist.

A stylus is commonly used in conjunction with a graphical user interface to enable user input to the host electronic device. The graphical interface may include one more regions in which a graphical control, such as an icon, button or tile, is displayed. The host device is controlled, at least in part, by user interaction with graphical controls.

Certain aspects of the disclosure relates to an electronic device that includes a screen operable to display a color image formed by a plurality of pixels, each having one or more color components. The color image is defined by a mapping between screen locations and pixel color components. For certain images, there is a corresponding mapping between pixel color components and screen location. If this mapping exists, it enables a processor of the electronic device coupled to the screen to determine a first screen location at which the one or more color components of a pixel displayed at the first location matches a color value sensed by a stylus. In accordance with certain aspects of the present disclosure, the color image, or at least part of the color image, is selected such that a mapping between pixel color components and screen location exists. The processor may also determine a second screen location in response to a sensed location of the stylus and one or more calibration parameters. The one or more calibration parameters may then be adjusted in response to the first and second screen locations.

**FIG**. **1** is a diagrammatic representation of a system 100 for automatic calibration of a stylus, in accordance with an embodiment of the present disclosure. A stylus 102 is manipulated by a user 104 and is used to select an image 106 displayed on a screen 108 of a host electronic device 110. The displayed image 106 may be an icon, a tile, or other image that identifies a region of screen 108. Stylus touch within the region occupied by the image is used to control the host electronic 110.

An image 106 comprises an array of color pixels. If each pixel or group of pixels in the array has a unique color, a measurement of the color may be used to determine a location within the array and a corresponding location on the display screen. In accordance with various aspects of the present invention, the stylus 102 incorporates a color sensor that is operable to sensor color of light emitted from the screen 108 in the region of the stylus tip 112.

The sensed color components may be communicated from the stylus 102 to the host electronic device 110 over a wired link or over a wireless communication link, such as a Radio-Frequency (RF) or Infrared (IR) link.

In accordance with certain aspects of the disclosure, a known mapping between the color components of a pixel, or group of pixels, of the image 106 and the screen location at which it is displayed is used to determine a stylus location with respect to the screen.

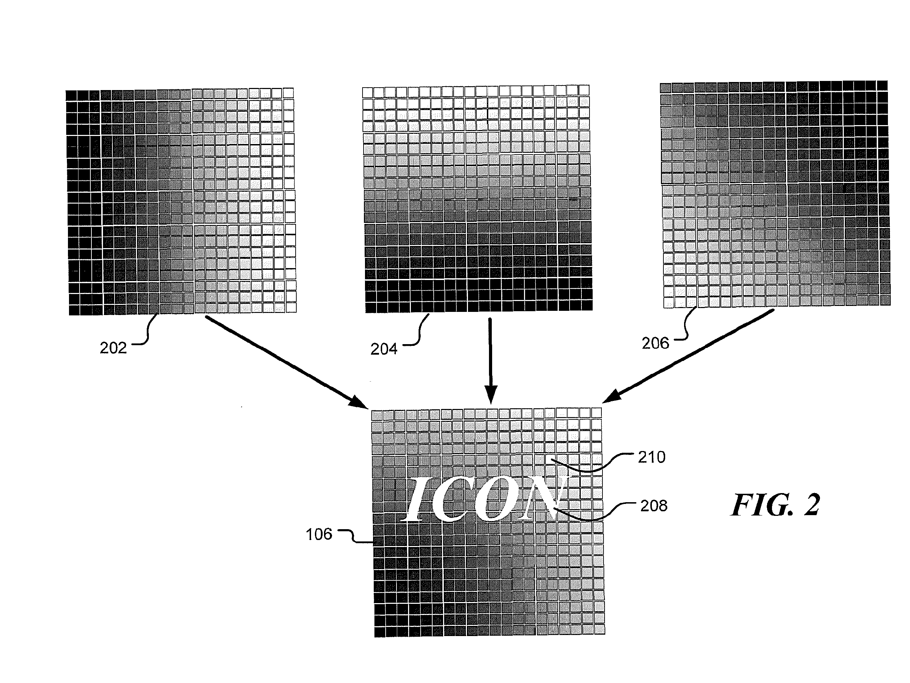

**FIG. 2** is an example of a displayed image 106 that includes a color palette, in accordance with an embodiment of the present disclosure. In this embodiment, the image 106 is composed of a first color component image 202, a second color component image 204 and a third color component 206. The color components may be red, green and blue, for example. In the figure, the lighted shading denotes a high level of the component. Together, the color components form the background of an image 106.

The image 106 may also contain text 208 or other graphics. In one illustrative embodiment, the text color (or colors) is not used in the background of the image. When the text color is sensed, no calibration is performed. Since much of the image is color coded for location, calibration is performed often. In a further embodiment, the text is also color coded for location, so that calibration may be performed whenever the stylus senses a color within the image. In yet another embodiment, a region of the image 106, such as the text region or another region, may be used to calibrate the color sensor of the stylus. For example, a white region may be used to set the white balance of the stylus sensor.

In operation, a color sensor in a stylus senses the color of a pixel or group of pixels (e.g., 210), and determines the color components. The color components may then be used to determine the location of the pixel having those color components using the known mapping between color components and screen location.

In a further operation, a second image such as a second icon, is provided with a white background to enable calibration of the color balance of the stylus.

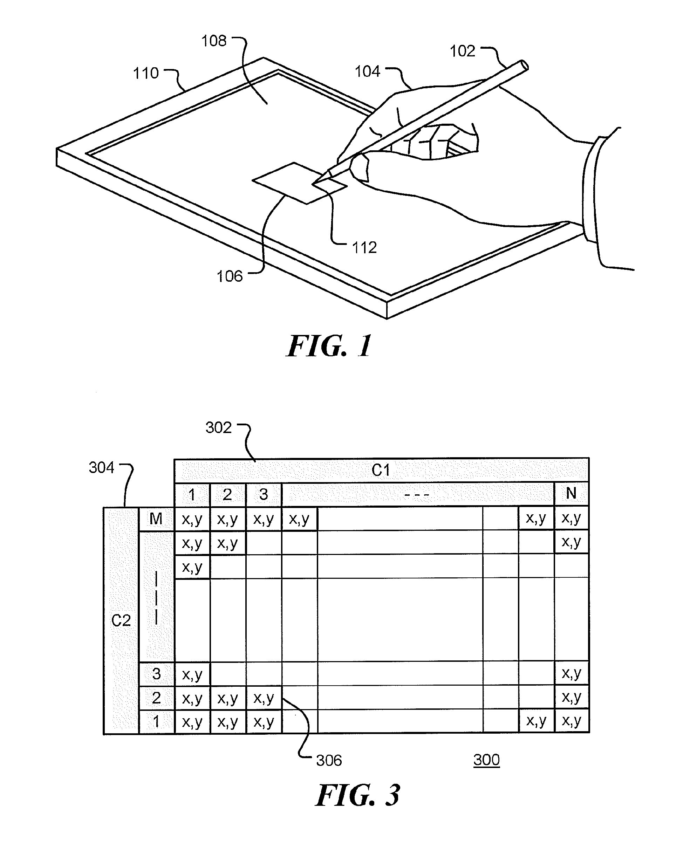

FIG. 3 shows an example lookup table 300 that defines a mapping between two components of pixel color and screen locations. The table 300 is indexed by a first color component (C1) 302 and a second color component (C2) 304. If, for example, color components C1=3 and C2=2 are sensed by a stylus, the x- and y-coordinates in table entry 306 are retrieved and define the location of the pixel sensed by the stylus. The mapping between color components and pixel locations may be defined by means other than a lookup table. For example, analytic or parametric expressions may be used.

C1 and C2 may be components of a two-dimensional color space, such as an r-g chromaticity color space. In such a color space, colors are normalized by an intensity level so that color measurements sensed by the stylus are independent of screen brightness. For example, if R, G and B are the red, green and blue color components of a pixel, the r-g chromaticity components

are $$C1 = r = \frac{R}{R+G+B}$$ and

$$C2 = g = \frac{G}{R+G+B}.$$ In a further example, the color

components are $C1 = \frac{R}{B}$ and $C2 = \frac{G}{B}.$ Other two-dimensional color spaces may be used.

In the example shown, the x-coordinate of a position may be obtained by sensing the (normalized) amount of first color component and the y-coordinate may be found by sensing the (normalized) amount of the second color component. More generally, a lookup table indexed by color components may be accessed to find location coordinates. It will be apparent to those of ordinary skill in the art that other color components may be used.

In a further embodiment, a lookup table indexed by location coordinates is searched to discover the location of a measured color.

In principle, a one dimensional scale such as gray scale or intensity scale, can be used. For example, each pixel could have a unique gray value, allowing a mapping between gray-value and position, sensing the value would be difficult. Black and white regions may be provided to allow automatic calibration of a photo-sensor in the sensor with respect to the screen brightness.

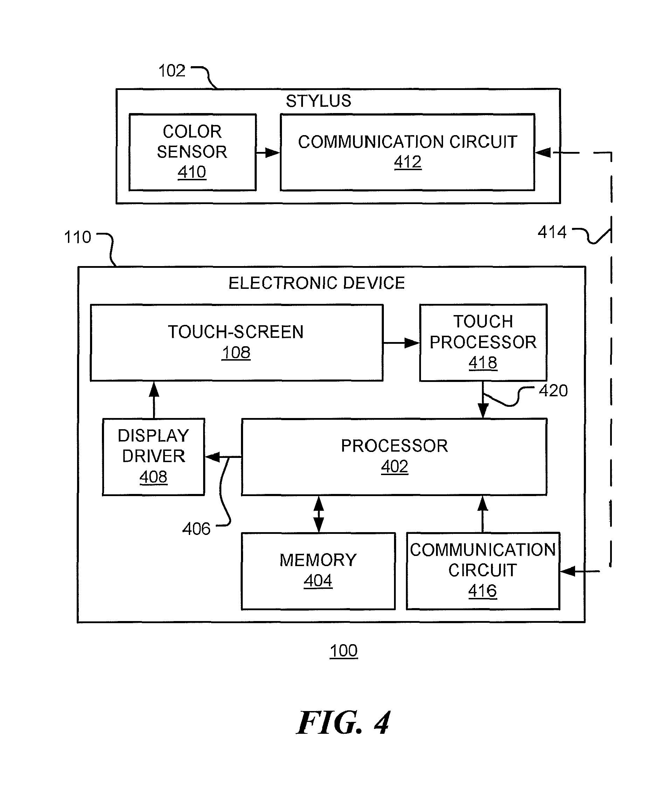

FIG. 4 is a block diagram of a system for automatic calibration of a stylus in accordance with an exemplary embodiment of the present disclosure. The system 100 comprises a stylus 102 and a host electronic device 110. The host electronic device 110 includes a processor 402 operatively coupled to a memory 404. The memory 404 stores one or more icons or other images to be used in a graphical used interface. Images to be displayed are passed to display driver 408 and then rendered on a screen 108.

The stylus 102 includes a color sensor 410 this is operable to detector color components of light at the tip of the stylus. The color components are passed to a communication circuit 412 and are transmitted via communication link 414 to a corresponding communication circuit 416 of the host electronic device 110.

The location of the stylus may be detected by various means known to those of ordinary skill in the art. In accordance with an exemplary embodiment, screen 108 is a touch screen coupled to a touch processor 418 that senses a touch location and passes a location signal 420 to the processor 402. In a further exemplary embodiment, the screen location is sensed by the stylus and communicated via the communication link 414 to the host electronic device 110.

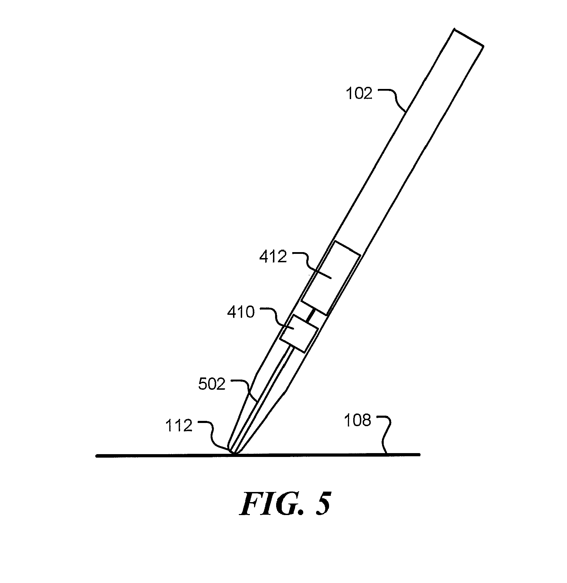

FIG. 5 is a diagram of a color-sensing stylus in accordance with an illustrative embodiment of the present disclosure. The body of the stylus 102 has a tip 112 at one end for interacting with a screen 108 of an electronic device. A color sensor 410 is used to sense color components of light emitted from the screen 108, and a transmitter 412 is used to output a signal representative of the sensed color components. In certain embodiments, the color sensor 410 includes red, green and blue photo-detectors that produce red, green and blue signals.

In certain illustrative embodiments, an optical channel 502 is used to couple light from the tip 112 of the stylus 102 to the color sensor 410. The channel may be an open channel, or an optically transparent material and may be surrounded by a reflective coating.

An optical lens may be positioned in front of the color sensor to provide improved resolution.

In order to compensate for variations in screen brightness, the stylus may normalize one or more of the red, green and blue signals to be independent of brightness of the light at the stylus tip.

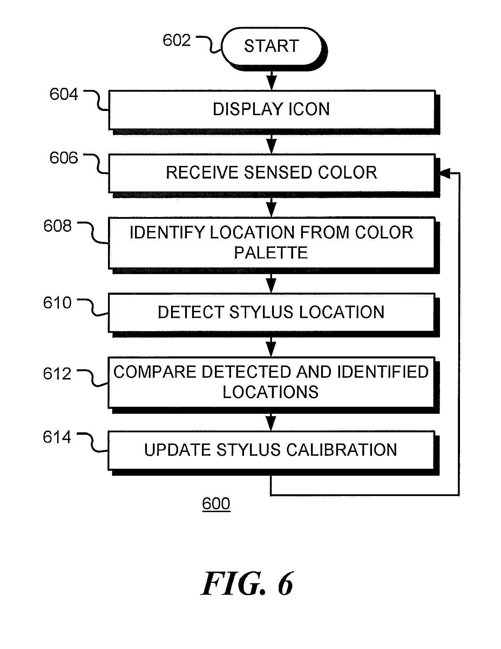

FIG. 6 is a flow chart 600 of a method for automatic calibration of a stylus, in accordance with exemplary embodiments of the present disclosure. Following start block 602, an icon or other color coded image is displayed on the screen of an electronic device at block 604. The color image is an array of pixels each having one or more color components. At block 606, one or more color components sensed by a stylus are received and, at block 608 a first screen location is determined, at which the one or more color components of a pixel of the array of pixels matches one or more color components sensed by the stylus. The first screen location is found using a known mapping between the color components and screen locations of pixels having those color components. At block 610 a second screen location is determined in response to a sensed location of the stylus. The second screen location is dependent upon one or more calibration parameters. At block 612, the first location, identified via the color components, is compared to the second location, identified from stylus position sensing, are compared and at block 614 the calibration parameters are adjusted dependent upon the first and second screen locations so that the second location more closely matches the first location.

In certain illustrative embodiments, the first screen location is determined by accessing a lookup table indexed by the one or more color components. The one or more color components may be normalized to be independent of screen brightness.

For improved accuracy, the calibration parameters may be adjusted dependent upon color components sensed when the stylus is in contact with the screen. This may be achieved by sensing when the stylus is in contact with the screen and only calibrating the stylus when stylus is in contact with the screen.

For improved accuracy, a second color image having a uniform color background may be displayed on the screen. When the stylus senses the color components of the uniform background, the relative levels of the components may be compared to the known relative levels of the uniform background. This enables the color balance of the one or more color components sensed by the stylus to be adjusted dependent upon sensed color components of the uniform color background of the second color image.

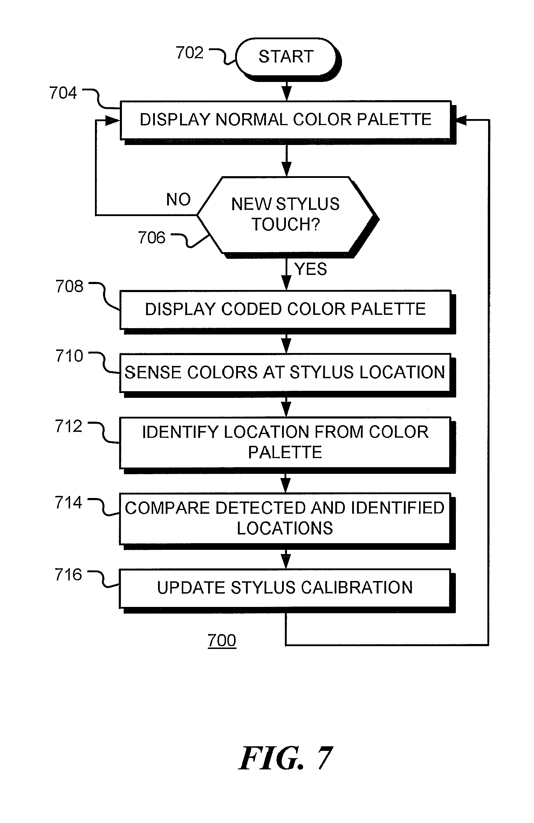

FIG. 7 is a flow chart 700 of a further method for automatic calibration of a stylus, in accordance with an embodiment of the present disclosure. Following start block 702, an icon or other image is displayed on the screen of a host electronic device at block 704. The image may relate to a control element of a graphical user interface, for example. At decision block 706, it is determined is a stylus has touched the displayed image. The touch may be determined by means such as, for example, ultrasonic detection or electromagnetic detection, and yields an estimated stylus location. If so, as depicted by the positive branch from decision block 706, at least part of the image is replaced with a color coded image at 708. The color coded image presents a spatially coded color palette in the region surround and including the estimated stylus location. At block 710, the stylus senses the color components at the tip of stylus and at block 712, and the sensed color components are used to identify the stylus location as described above. At block 714, the estimated stylus location is compared with the location identified from the color coded image. At block 716, the stylus calibration parameters are updated to compensate for any difference between the identified and estimated stylus locations. Flow then returns to block 704.

Additionally an image have a spatially uniform color may be displayed. The known color components of the image may be used to calibrate to color sensor of the stylus. For example, a white image may be displayed, for which the known color components are equal.

The implementations of the present disclosure described above are intended to be merely exemplary. It will be appreciated by those of skill in the art that alterations, modifications and variations to the illustrative embodiments disclosed herein may be made without departing from the scope of the present disclosure. Moreover, selected features from one or more of the above-described exemplary embodiments may be combined to create alternative embodiments not explicitly shown and described herein.

It will be appreciated that any module or component disclosed herein that executes instructions may include or otherwise have access to non-transient and tangible computer readable media such as storage media, computer storage media, or data storage devices (removable or non-removable) such as, for example, magnetic disks, optical disks, or tape data storage. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the server, any component of or related to the network, backend, etc., or accessible or connectable thereto. Any application or module herein described may be implemented using computer readable/executable instructions that may be stored or otherwise held by such computer readable media.

The present disclosure may be embodied in other specific forms without departing from its spirit or essential characteristics. The described exemplary embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An electronic device 110 comprising:

   a screen 108 operable to display a color image 106 formed by a plurality of pixels, each pixel of the plurality of pixels having one or more color components; and
   a processor 402 coupled to the screen 108 and operable to determine a first screen location on the screen at which the one or more color components of a pixel 210, of the plurality of pixels displayed at the first screen location, matches a color value sensed by a stylus 102.

**2.** The electronic device of claim 1, where the processor 402 is further operable to:

determine a second screen location on the screen 108 in response to a sensed location of the stylus 102 and one or more calibration parameters; and
adjust the one or more calibration parameters in response to the determined first and second screen locations.

**3.** The electronic device of claim 1, further comprising a memory 404, accessible by the processor 402, operable to store a lookup table 300 representative of a mapping between one or more color components (302, 304) of the plurality of pixels and corresponding screen locations 306.

**4.** The electronic device of claim 3, where the memory 404 is operable to store a representation of the color image 106.

**5.** The electronic device of claim 1, further comprising a receiver 416 operable to receive the one or more color components from a transmitter 412 of the stylus 102.

**6.** A stylus 102 comprising:

a body including
a color sensor 410 operable to sense at a tip 112 of the body color components of light emitted from a screen 108 of an electronic device 110; and
a transmitter 412 operable to output a signal 414 representative of the sensed color components.

**7.** The stylus of claim 8, where the color sensor comprises red, green and blue photo-detectors that produce red, green and blue signals, respectively.

**8.** A method for calibrating a stylus relative to a screen 108 of an electronic device 110, comprising:

displaying a color coded image 106 on the screen 108 of the electronic device 110, the color coded image 106 comprising a plurality of pixels each having one or more color components (302, 304);
determining a first screen location at which the one or more color components of a pixel 210 of the plurality of pixels matches one or more color components sensed by the stylus 102;
determining a second screen location in response to a sensed location of the stylus 102 and one or more calibration parameters; and
adjusting the one or more calibration parameters in response to the determined first and second screen locations.

**9.** The method of claim 8, where determining the first screen location comprises accessing a lookup table 300 indexed by the one or more color components (302, 304).

**10.** The method of claim 8, further comprising normalizing the one or more color components (302, 304) to be independent of screen brightness.

**11.** The method of claim 8, further comprising the electronic device 110 receiving the one or more sensed color components from the stylus 102.

**12.** The method of claim 11, further comprising:

sensing when the stylus 102 is in contact with the screen 108; and
calibrating the stylus 102 in response to the stylus being in contact with the screen 108.

**13.** The method of claim 8, where the color image 106 comprises an icon.

**14.** The method of claim 8, further comprising:

displaying a second color image having uniform color background; and
adjusting a color balance of the one or more color components sensed by the stylus 102 dependent upon sensed color components of the uniform color background of the second color image.

**15.** The method of claim 8, where displaying the color coded image comprises:

displaying a control image 106 of a graphical user interface on the screen 108 of the electronic device 110;
detecting a stylus touch on the control image 106; and
replacing at least part of the control image 106 with the color coded image in response to detecting the stylus touch.

**Amended claims in accordance with Rule 137(2) EPC.**

**1.** An electronic device (110) comprising:

a screen (108) operable to display a color image

(106) formed by a plurality of pixels, each pixel of the plurality of pixels having one or more color components; and

a processor (402) coupled to the screen (108) and operable to determine a first screen location on the screen at which the one or more color components of a pixel (210), of the plurality of pixels displayed at the first screen location, matches a color value sensed by a stylus (102).

2. The electronic device of claim 1, where the processor (402) is further operable to:

determine a second screen location on the screen (108) in response to a sensed location of the stylus (102) and one or more calibration parameters; and

adjust the one or more calibration parameters in response to the determined first and second screen locations.

3. The electronic device of claim 1, further comprising a memory (404), accessible by the processor (402), operable to store a lookup table (300) representative of a mapping between one or more color components (302, 304) of the plurality of pixels and corresponding screen locations (306).

4. The electronic device of claim 3, where the memory (404) is operable to store a representation of the color image (106).

5. The electronic device of claim 1, further comprising a receiver (416) operable to receive the one or more color components from a transmitter (412) of the stylus (102).

6. The electronic device of any preceding claim further comprising a stylus (102) comprising:

a body including

a color sensor (410) operable to sense at a tip (112) of the body color components of light emitted from a screen (108) of an electronic device (110); and

a transmitter (412) operable to output a signal (414) representative of the sensed color components.

7. The device of claim 8, where the color sensor comprises red, green and blue photo-detectors that produce red, green and blue signals, respectively.

8. A method for calibrating a stylus relative to a screen (108) of an electronic device (110), comprising:

displaying a color coded image (106) on the screen (108) of the electronic device (110), the color coded image (106) comprising a plurality of pixels each having one or more color components(302, 304);

determining a first screen location at which the one or more color components of a pixel (210) of the plurality of pixels matches one or more color components sensed by the stylus (102);

determining a second screen location in response to a sensed location of the stylus (102) and one or more calibration parameters; and

adjusting the one or more calibration parameters in response to the determined first and second screen locations.

9. The method of claim 8, where determining the first screen location comprises accessing a lookup table (300) indexed by the one or more color components (302, 304).

10. The method of claim 8, further comprising normalizing the one or more color components (302,304) to be independent of screen brightness.

11. The method of claim 8, further comprising the electronic device (110) receiving the one or more sensed color components from the stylus (102).

12. The method of claim 11, further comprising:

sensing when the stylus (102) is in contact with the screen (108); and

calibrating the stylus (102) in response to the stylus being in contact with the screen (108).

13. The method of claim 8, where the color image (106) comprises an icon.

14. The method of claim 8, further comprising:

displaying a second color image having uniform color background; and

adjusting a color balance of the one or more color components sensed by the stylus (102) dependent upon sensed color components of the uniform color background of the second color image.

15. The method of claim 8, where displaying the color coded image comprises:

displaying a control image (106) of a graphical user interface on the screen (108) of the electronic device (110);

detecting a stylus touch on the control image (106); and

replacing at least part of the control image (106)

with the color coded image in response to detecting the stylus touch.

**FIG. 1**

| | | 1 | 2 | 3 | | - - - | | | N |
|---|---|---|---|---|---|---|---|---|---|
| | M | x,y | x,y | x,y | x,y | | | x,y | x,y |
| | | x,y | x,y | | | | | | x,y |
| | | x,y | | | | | | | |
| C2 | | | | | | | | | |
| | 3 | x,y | | | | | | | x,y |
| | 2 | x,y | x,y | x,y | | | | | x,y |
| | 1 | x,y | x,y | x,y | | | | x,y | x,y |

**FIG. 3**

*FIG. 2*

**FIG. 4**

FIG. 5

602 — START

604 — DISPLAY ICON

606 — RECEIVE SENSED COLOR

608 — IDENTIFY LOCATION FROM COLOR PALETTE

610 — DETECT STYLUS LOCATION

612 — COMPARE DETECTED AND IDENTIFIED LOCATIONS

614 — UPDATE STYLUS CALIBRATION

600

*FIG. 6*

702 — START

704 — DISPLAY NORMAL COLOR PALETTE

NO — NEW STYLUS TOUCH?

706 —

YES

708 — DISPLAY CODED COLOR PALETTE

710 — SENSE COLORS AT STYLUS LOCATION

712 — IDENTIFY LOCATION FROM COLOR PALETTE

714 — COMPARE DETECTED AND IDENTIFIED LOCATIONS

716 — UPDATE STYLUS CALIBRATION

700

*FIG. 7*

**EP 2 743 803 A1**

## EUROPEAN SEARCH REPORT

Europäisches Patentamt
European Patent Office
Office européen des brevets

**Application Number**

EP 12 19 7085

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/250381 A1 (GEAGHAN BERNARD O [US]) 9 November 2006 (2006-11-09) * paragraphs [0003], [0004], [0014], [0015], [0018], [0020], [0021], [0026], [0037], [0044], [0045], [0046], [0058] * | 1-15 | INV. G06F3/041 G06F3/0354 |
| A | US 2011/291998 A1 (ADAMS GUY [GB] ET AL) 1 December 2011 (2011-12-01) * paragraphs [0013], [0016] * | 1-15 | |
| A | EP 1 621 986 A1 (HEWLETT PACKARD DEVELOPMENT CO [US]) 1 February 2006 (2006-02-01) * paragraph [0017] * | 1-15 | |

**TECHNICAL FIELDS SEARCHED (IPC)**

G06F

The present search report has been drawn up for all claims

| Place of search | Date of completion of the search | Examiner |
|---|---|---|
| Munich | 6 May 2013 | Thibaudeau, Jean |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

15

**ANNEX TO THE EUROPEAN SEARCH REPORT
ON EUROPEAN PATENT APPLICATION NO.**                    EP 12 19 7085

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2013

| Patent document cited in search report | Publication date | Patent family member(s) | Publication date |
|---|---|---|---|
| US 2006250381    A1 | 09-11-2006 | US    2006250381 A1<br>WO    2006121632 A2 | 09-11-2006<br>16-11-2006 |
| US 2011291998    A1 | 01-12-2011 | NONE | |
| EP 1621986    A1 | 01-02-2006 | EP       1621986 A1<br>US    2006022963 A1 | 01-02-2006<br>02-02-2006 |

EPO FORM P0459

For more details about this annex : see Official Journal of the European Patent Office, No. 12/82